Europäisches Patentamt

European Patent Office

Office européen des brevets

(11) Publication number: **0 094 088**
**A1**

# EUROPEAN PATENT APPLICATION

(21) Application number: 83104624.8

(22) Date of filing: 11.05.83

(51) Int. Cl.³: **A 23 L 1/236**

---

(30) Priority: **12.05.82 US 377296**

(43) Date of publication of application: **16.11.83 Bulletin 83/46**

(84) Designated Contracting States: **AT BE CH DE FR GB IT LI NL SE**

(71) Applicant: **G.D. Searle & Co., Box 1045, Skokie, Illinois 60076 (US)**

(72) Inventor: **Young, James George, 2729 Oak Avenue, Northbrook Illinois (US)**
Inventor: **Paul, David Barner, 42 Terrace Lane, Lake Zurich Illinois (US)**
Inventor: **Volin, Linda Lucille, Box 614, Oquawka Illinois (US)**

(74) Representative: **Bell, Hans Chr. et al, Bell, Wolff und Bell Adelonstrasse 58, D-6230 Frankfurt am Main 80 (DE)**

---

(54) **Method for spray drying dipeptide sweeteners.**

㊾ A method of producing an improved spray dried dipeptide sweetener is described. The method consists of the formation of a dipeptide sweetener solution with an acid/enzyme/acid hydrolyzed oligosaccharide, pressurization of the solution and injection of carbon dioxide gas before feeding the resulting mixture to a spray drying nozzle.

EP 0 094 088 A1

Our No. 24 081

G. D. Searle & Co.
P. O. Box 1045, Skokie, Illinois  60076
U S A

## METHOD FOR SPRAY DRYING DIPEPTIDE SWEETENERS

## BACKGROUND OF THE INVENTION

### FIELD OF THE INVENTION

This invention relates to a novel method of making a spray dried low calorie sweetener.  In particular the invention relates to a method of preparing a uniform free flowing dipeptide sweetener agglomerate having the appearance and glint of sugar consisting of preparing an aqueous solution of dipeptide sweetener with an acid/enzyme/acid hydrolyzed oligosaccharide, the solution is then pressurized and carbon dioxide is injected after the pressurization but prior to reaching the spray drier.  The solution is then spray dried in a conventional manner.

Spray drying is a useful method of preparing edible foodstuffs. Its advantage is that the spray dried product may have a decreased bulk density thus increasing volume. Spray drying may also affect such qualities as solubility. It has long been known that spray drying of heat sensitive materials can be accomplished at temperatures above that which normally would be deleterious. U.S. patent No. 51,263 (1865) teaches a method of the spray drying eggs at temperatures exceeding the normal decomposition temperature for eggs. In U.S. Patent reissue No. 13,232 a method for the spray drying of milk is disclosed which uses temperatures well above the critical temperature of milk. The reason for the apparent incongruity is the relatively short time period the spray dried material is in actual contact with elevated temperatures. In any event the method is now widely accepted as a means of preparing heat sensitive materials.

The dipeptide sweeteners that may be used in the invention process are exemplified but not limited to the compounds set forth in U.S. Patent Nos. 3,475,403, 3,492,131, 4,029,701 and the like. Most suitable among these compounds are the lower alkyl esters of aspartylphenylalanine wherein the stereochemical configuration is L-L, DL-DL, DL-L or L-DL including the representative salts or complexes thereof. Illustrative of the lower alkyl esters are methyl, ethyl, propyl, butyl, pentyl, hexyl, heptyl and the branched chain isomers thereof, the methyl ester being preferred. The dipeptide sweeteners may also form suitable salts and complexes, see e.g. U.S. Patent 4,029,701 and our copending application Case 2300 filed on or about March 5, 1982, "Dipeptide Sweetener-Metal Complexes" by Josef Tsau. Currently, Aspartame (APM), is approved by the FDA for food use. APM is the methyl ester of aspartylphenylalanine. APM which is decomposed rapidly above 80°C., may be safely spray dried because of the relatively short exposure ($<$ 10 sec) to elevated temperature when compared with its decomposition time curve.

The dipeptide sweeteners appear to have great commercial applications as sweetening agents as they range up to 200 times the sweetness level of sugar, have no discernible unpleasant aftertaste, and can be produced from naturally occurring amino acids. Because of this intense sweetness, the dipeptide sweeteners require very small amounts for use when compared with sucrose. For this reason spray drying has proven useful in that a dipeptide sweetener product can be prepared that can be of a bulk density comparable to sucrose on a spoon for spoon basis.

Sucrose in comparison is recognized on a commercial level by its uniform appearance and its glint. Glint is the characteristic sparkle of a material as light reflects off the respective sides of a crystalline structure. Products that have a glint more like that of sugar are, in general, a more pharmaceutically elegant product as well as more readily acceptable to the ultimate user. Previous methods for spray drying dipeptide sweeteners have given a product in which the overall appearance and glint of the final product when compared with sucrose is poor.
Further, problems have arisen regarding the density of the material, and the uniformity of the final product. In addition, flowability and dispersibility problems occur which might require flowability agents and the like.

PRIOR ART

Spray drying is well known in the art as described above.

In addition, spray drying technology has been applied to dipeptide sweeteners as well. U.S. Patent No. 3,753,739 describes a process for spray drying APM which consists of the preparation of a starch hydrolysate (0-20 DE only) solution at 30°-60°C., then forming a water slurry of APM at up to 40°C., then admixing the 2 solutions and promptly drying the solution to not more than 4% moisture. U.S. Patent No. 3,761,288 relates to the preparation of a fast dissolving APM product by preparing an aqueous solution of an edible bulking agent which contains less than 1 part APM per part bulking agent and then spray drying above 100°C. Finally, U.S. patent Nos. 3,962,468 and 4,059,706 describes a spray dried APM composition containing 15% to 60% weight of APM to total solids, forming a slurry with undissolved particles, and drying to less than 5% moisture with a bulk density of greater than 0.2 grams/ml.

SUMMARY OF THE INVENTION

The invention relates to a method for the preparation of a free flowing spray dried dipeptide sweetener agglomerate of uniform consistency and an appearance and glint comparable to sucrose which comprises the steps:

a)   preparing an aqueous solution of a dipeptide sweetener with an acid/enzyme/acid hydrolyzed oligosaccharide;

b)   pressurizing of the solution of step a;

6        **0094088**

c)    injecting carbon dioxide into the pressurized solution of step b; and

d)    spray drying the solution of step c.

The invention further relates to products produced by the above method.

Acid/enzyme/acid hydrolyzed oligosaccharides are commercially available preparations of a digest corn starch at a pH of about 4.5 and reducing sugar content (DE) of from 0-20% by weight of the ascribed oligosaccharide (e.g. malto dextrin). The preferable DE range is 10-20% w/w of the oligosaccharides.

Pressurization of the solution is normally accomplished by means of a standard mechanical pressure pump. The carbon dioxide is then fed into the solution via a gas booster pump to control the pressure of the final solution.

The use of gases to control stability and bulk density of spray dried products is widely known. Both inert and explosive gases are used, for example, nitrogen, oxygen, air, helium, carbon dioxide, etc. with gases being chosen primarily on the basis of economic factors and compatibility with the spray dried material, rather than there being any difference in the final product based on the gas chosen. An accepted method for introducing a gas is to inject such gas prior to the pressurization. This creates a potential hazard in that injection of gas before pressurization may cause cavitation in the pump with resultant damage to the pump. (See eg Sweeteners and Enhancers, Noyes Data Corp., Pintauro (1977). In testing a number of gases, ie. nitrogen, oxygen, air, carbon dioxide, etc. it has been suprisingly discovered that carbon dioxide exclusively, injected after the solution is pressurized, gives a product with greatly improved bulk density, flowability, dispersibility, and glint and the general appearance very close to that of sucrose when compared with other gases or methods. The product thus produced by this novel method shows increased uniformity of fill blends, decreased hygroscopicity, decreased dusting problems during filling of packages, decreased need for additional flow agents as well as a more acceptable general appearance and a glint comparable to sucrose.

The method of the invention consists of first formulating a mixture of dipeptide sweetener and an acid/enzyme/acid hydrolyzed oligosaccharide wherein the dipeptide sweetener is from about 1 to about 5% of the weight of the total solids. An aqueous solution is then prepared wherein the solids comprise from about 40 to 60% of the total solids at $60°C \pm 5°C$. The solution is then fed to a pump and pressurized. A preferred pressure is 400-900 psi. After the solution is pressurized, carbon dioxide is injected into the system via a gas booster pump. It is necessary to pressurize the carbon dioxide at a pressure preferably 200-400 psi above that of the dipeptide sweetener oligosaccharide solution. The solution may then be fed to a spray drying nozzle and dried in the conventional manner.

The invention will appear more fully from the examples which follow. These examples are given by way of illustration only and are not to be considered as limiting the invention either in spirit or in scope as modification in materials and methods will be apparent from the disclosure to those skilled in the art.

DESCRIPTION OF THE PREFERRED EMBODIMENTS

Example 1

A 55% solid aqueous solution is prepared by adding 16 pounds of Maltrin® 150 (DE 15) and 35 pounds APM to an appropriate amount of water. The mixture is heated and pumped to 1300 psi. Using a gas booster pump, carbon dioxide at 1600 psi is introduced into the system. This mixture is then fed to the spray nozzle and dried. The final product has a particle size of greater than 250μ (on 60 mesh screen) and has a moisture content of approximately 3%. The bulk density of the product upon packaging is from 0.06 to 0.122g/cc.

Flowability.  100 grams of product will pass a 45°
anglefunnel with a neck of 1/2" and an internal diameter
of 0.390" in 20 seconds.  No bridging or rat-holing is
seen.

Dispersability.  15cc disperses instantly in cold (5°c)
water with minimal foam or fizz.

Particle size distribution is comparable to commercial
sugar, white, with a shiny glint as seen in commercial
sugar.

Example 2

A solution was prepared as in example 1 except that the
mixture was fed at 550 psi and the carbon dioxide fed at
850 psi.  The final product was 4% moisture with a bulk
density of from .095 to .144 g/cc. and had the appearance
and characteristics of the product of example 1.

Example 3

A solution was prepared as in example 1 except a malto
dextrin with a DE of 20 was used at 500 to 550 psi with
carbon dioxide at 850 psi.  The final product had 3.2%
moisture and a bulk density of .093 to .131 g/cc. and a
general appearance and characteristics of the product in
example 1.

0094088

CLAIMS

What we claim is:

1.    A method for the preparation of a free flowing
      spray dried dipeptide sweetener agglomerate of
      uniform consistency and an appearance and glint
      comparable to sucrose which comprises the steps:

      a)    preparing an aqueous solution of a dipeptide
            sweetener with an acid/enzyme/acid
            hydrolyzed oligosaccharide;

      b)    pressurizing the solution of step a;

      c)    injecting carbon dioxide into the
            pressurized solution of step b; and

      d)    spray drying the solution of step c.

2.    A method according to Claim 1 wherein the
      dipeptide sweetener is aspartame.

3.    A method according to Claim 1 wherein DE of the
      oligosaccharide is from 10 to 20.

11   0094088

4. A method according to Claim 1 wherein the
pressure of the solution of a) is from 400-900
psi.

5. A method according to Claim 1 where the pressure
of the carbon dioxide is 200-400 psi; greater
than that of solution a.

6. An aspartame spray dried agglomerate product
prepared according to the method of Claim 1.

# European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | US-A-4 059 706 (L.D. PISCHKE et al.) * Abstract * | | A 23 L 1/236 |
| D,A | US-A-3 761 288 (M. GLICKSMAN et al.) * Claims 1, 5 * | | |
| A | GB-A-1 511 392 (GENERAL FOODS CORP.) * Claims 1-6 * | | |

TECHNICAL FIELDS SEARCHED (Int. Cl. 3)

A 23 L 1/00

The present search report has been drawn up for all claims

| Place of search | Date of completion of the search | Examiner |
|---|---|---|
| BERLIN | 04-08-1983 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82